# EUROPÄISCHE PATENTSCHRIFT

(11) **EP 4 158 840 B1**
(45) Veröffentlichungstag und Bekanntmachung des Hinweises auf die Patenterteilung: **13.03.2024**
(21) Anmeldenummer: 21729491.7
(22) Anmeldetag: 27.05.2021
(51) Int. Cl.: H04L 9/32

(54) **VORRICHTUNG UND VERFAHREN ZUR ERZEUGUNG VON HARDWARE-BASIERTEN PHYSIKALISCH NICHT KLONBAREN FUNKTIONEN UND DEREN VERWENDUNG**
DEVICE AND METHOD FOR GENERATING HARDWARE-BASED PHYSICALLY NON-CLONABLE FUNCTIONS AND USE THEREOF
DISPOSITIF ET PROCÉDÉ POUR LA PRODUCTION DE FONCTIONS MATÉRIELLES PHYSIQUEMENT NON COPIABLES ET LEUR UTILISATION

(30) Priorität: 29.05.2020 DE 102020206792
(43) Veröffentlichungstag der Anmeldung: 05.04.2023
(73) Patentinhaber: Fraunhofer-Gesellschaft zur Förderung der angewandten Forschung e.V., 80686 München (DE); Universität Stuttgart, 70174 Stuttgart (DE)
(72) Erfinder: DU, Nan, 09126 Chemnitz (DE); SCHMIDT, Heidemarie, 09126 Chemnitz (DE); SCHULZ, Stefan, 09126 Chemnitz (DE); POLIAN, Ilia, 70469 Stuttgart (DE); BÜRGER, Danilo, 09126 Chemnitz (DE)
(74) Vertreter: Schairer, Oliver Michael
(86) Internationale Anmeldenummer: PCT/EP2021/064269
(87) Internationale Veröffentlichungsnummer: WO 2021/239910

(56) Entgegenhaltungen:
- CN-A- 109 495 272
- CN-A- 110 751 968
- US-A1- 2014 268 994
- GAO YANSONG ET AL: "mrPUF: A Novel Memristive Device Based Physical Unclonable Function", 9. Januar 2016 (2016-01-09), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 595 - 6, XP047333134, ISBN: 978-3-642-17318-9 [gefunden am 2016-01-09] Zusammenfassung Kapitel 1. "Introduction" Kapitel 3. "mrPUF" Kapitel 4. "mrPUF Evaluation"

## Beschreibung

Die Anmeldung betrifft eine Vorrichtung und ein Verfahren für hardware-basierte physikalisch nicht klonbare Funktionen und deren Betrieb, im Speziellen, eine Vorrichtung für hardware-basierte PUF mit elektroformierungsfreien, bipolaren Memristoren (PUF Physical Unclonable Function; physikalisch nicht klonbare Funktion). Ferner betrifft die Anmeldung den Aufbau einer elektronischen Schaltung und ein Verfahren zum Betrieb einer PUF.

Jüngste Fortschritte haben zum Internet der Dinge (Internet of Things, loT) geführt, einem Netzwerk aus miteinander verbundenen elektronischen Geräten und Sensoren, die Daten sammeln, Daten über eine Cloud austauschen und miteinander interagieren [1]. Für das loT gelten eine Reihe von Anforderungen. Dazu gehört ein extrem niedriger Stromverbrauch für den langfristigen autonomen Betrieb mittels Batterie und das zuverlässige Funktionieren unter rauen Bedingungen, bspw. unter extremen Temperaturen, mechanischen Erschütterungen oder elektrischen Störungen. Eine der Hauptforderungen ist die Widerstandsfähigkeit gegen mögliche böswillige Cyberangriffe. Die letztgenannte Anforderung ist besonders schwierig zu erfüllen, da Cyberangriffe über Netzwerkverbindungen als auch über physische Angriffe von Gegnern ausgeführt werden [2]. Fortschritte in der Nanotechnologie versprechen, einige der genannten Herausforderungen zu bewältigen, z.B. durch Verwenden der auf einem Memristor basierenden physikalischen nicht klonbaren Funktion (PUF), d. h. der Erzeugung geheimer kryptographischer Schlüssel durch reine Hardware-Grundelemente.

PUF stellt ein innovatives Hardwaresicherheits-Primitiv in der Ära des loT, das in verschiedenen Anwendungsfeldern als kryptographischer Schlüssel verwendet werden kann, dar. Es wurde bereits gezeigt, dass PUFs auf Basis der Silizium-CMOS-Technologie realisiert werden können. Im Jahr 2002 [3] wurde erstmals ein PUF für die Geräteauthentifizierung und die Schlüsselgenerierung realisiert [3-10]. Generell nutzen PUFs die inhärente Zufälligkeit des physischen Systems oder Fertigungsvarianten aus, um bei der Abfrage von "Herausforderungen" (Eingabe) eindeutige "Antworten" (Output) zu erzeugen, die praktisch nicht zu duplizieren sind. Elektronische, auf CMOS-Technologie basierende PUFs (z. B. Arbiter PUF [11-12] und SRAM PUF [13-15]) nutzen gewöhnlich die während ihres Herstellungsprozesses eingeführte Zufälligkeit, wie etwa die Schwankungen der Linienkantenrauigkeit oder der Dotieratomvariation aus. Solche CMOSbasierten PUFs sind jedoch nicht flächeneffizient und haben eine Fehlerrate größer als 20%. Deswegen benötigen CMOS-basierte PUFs eine komplizierte Nachbearbeitung von Daten [16].

Die ersten PUFs auf der Basis von Memristoren wurden 2013 vorgeschlagen [17-18]. Als Entropiequelle für PUF-Anwendungen wird Random Telegraph Noise (RTN, Telegraphenrauschen) ausgenutzt [19-21].

Große RTN-Werte können die Zuverlässigkeit eines PUF stark beeinträchtigen, da durch große RTN-Werte die "Antwort" eines gegebenen PUF bei der "Abfrage" instabiler ist.

Die bisherigen Arbeiten zu PUFs basieren hauptsächlich auf Simulationen. So wurde in [22] und in [23] gezeigt, wie die Variation der Schreibzeit beim probabilistischen Schalten einer memristiven Vorrichtung als Entropiequelle genutzt werden kann. Für das aktive Schalten wurde auch ein höherer Energieverbrauch als beim statischen Auslesen des Widerstandes in jedem Zyklus vorhergesagt.

Aufgrund des stochastischen Verhaltens von Memristoren, sind Memristoren ideale potentielle Kandidaten zur Realisierung einer Verschlüsselungshardware. Memristoren sind neuartige, mikroelektronische Bauelemente, deren elektrischer Widerstand in Abhängigkeit vom Stromfluss gezielt eingestellt werden kann und dann ohne anliegende äußere Spannung nichtflüchtig erhalten bleibt - daher das Kunstwort aus Memory (Gedächtnis) und Resistor (Widerstand). Es wird erwartet, dass Memristoren aufgrund ihres nichtflüchtigen Verhaltens nicht anfällig gegenüber Rauschen und Umwelteinflüssen sind. Gleichzeitig hängen die individuellen Merkmale von Memristoren jedoch stark und unkontrollierbar vom Herstellungsprozess ab und sind damit unvorhersagbar. Memristoren wurden beispielsweise in [24] beschrieben. In jüngerer Zeit werden auf HfO₂ basierende memristive Bauelemente für PUF-Anwendungen verwendet [25-26], die eine genaue Steuerung der aufgeteilten Referenzspannung erfordern. Die Wahl des Referenzwerts kann zusätzliche Fehler verursachen. Darüber hinaus ist ein Leseverstärker mit ausreichender Empfindlichkeit für eine erfolgreiche Digitalisierung von entscheidender Bedeutung [27].

Die Patentanmeldungsdruckschriften US 2014/268994 A1, CN 109 495 272 A und CN 110 751 968, sowie die Veröffentlichung von Y.S. Gao et al, "mrPUF: A Novel Memristive Device Based Physical Unclonable Function" offenbaren Hintergrundwissen über Memristor-basierenden PUFs.

Aufgabe der Erfindung ist es, verbesserte Konzepte zur Erzeugung und zur Verwendung von physikalisch nicht klonbaren Funktionen bereitzustellen.

Die Aufgabe wird gelöst durch eine Vorrichtung nach Anspruch 1, durch ein Verfahren nach Anspruch 17 und durch ein Computerprogramm nach Anspruch 18.

Eine Vorrichtung zur Erzeugung einer binären Zahlensequenz gemäß einer Ausführungsform wird bereitgestellt. Die Vorrichtung umfasst zwei oder mehr schaltbare Elemente. Die Vorrichtung ist ausgebildet, an jedes der zwei oder mehreren schaltbaren Elemente als Schreibspannung eine erste Schreibspannung oder eine zweite Schreibspannung, die von der ersten Schreibspannung verschieden ist, anzulegen, und/oder an jedes der zwei oder mehreren schaltbaren Elemente als Lesespannung eine erste Lesespannung oder eine zweite Lesespannung, die von der ersten Lesespannung verschieden ist, anzulegen. Jedes schaltbare Element der zwei oder mehreren schaltbaren Elemente ist ausgebildet, abhängig von der an das schaltbare Element angelegten Schreibspannung und/oder abhängig von der an das schaltbare Element angelegten Lesespannung, eine Ausgangsspannung mit einem ersten zufälligen oder pseudozufälligen Spannungswert aus einem ersten Spannungs-Wertebereich auszugeben oder mit einem zweiten zufälligen oder pseudozufälligen Spannungswert aus einem zweiten Spannungs-Wertebereich auszugeben. Des Weiteren umfasst die Vorrichtung einen oder mehrere Komparatoren, wobei jeder der ein oder mehreren Komparatoren genau einem der zwei oder mehr schaltbaren Elementen zugeordnet ist. Jeder Komparator der ein oder mehreren Komparatoren ist ausgebildet, abhängig von einem Vergleich der Ausgangsspannung desjenigen der zwei oder mehreren schaltbaren Elemente, dem der Komparator zugeordnet ist, mit einer Grenzspannung, einen binären Ausgabewert auszugeben. Die Vorrichtung ist ausgebildet, die binäre Zahlensequenz abhängig von dem binären Ausgabewert jedes der ein oder mehreren Komparatoren zu erzeugen.

Des Weiteren wird ein Verfahren zur Erzeugung einer binären Zahlensequenz gemäß einer Ausführungsform bereitgestellt. Das Verfahren umfasst:
- Anlegen einer Schreibspannung, die eine erste Schreibspannung ist oder die eine zweite Schreibspannung ist, die von der ersten Schreibspannung verschieden ist, an jedes von zwei oder mehreren schaltbaren Elementen, und/oder Anlegen einer Lesespannung, die eine erste Lesespannung ist oder die eine zweite Lesespannung ist, die von der ersten Lesespannung verschieden ist, an jedes der zwei oder mehreren schaltbaren Elemente. Jedes schaltbare Element der zwei oder mehreren schaltbaren Elemente, abhängig von der an das schaltbare Element angelegten Schreibspannung und/oder abhängig von der an das schaltbare Element angelegten Lesespannung, eine Ausgangsspannung mit einem ersten zufälligen oder pseudozufälligen Spannungswert aus einem ersten Spannungs-Wertebereich ausgibt oder mit einem zweiten zufälligen oder pseudozufälligen Spannungswert aus einem zweiten Spannungs-Wertebereich ausgibt. Jeder von ein oder mehreren Komparatoren ist genau einem der zwei oder mehr schaltbaren Elementen zugeordnet.
- Ausgeben eines binären Ausgabewerts durch jeden von ein oder mehreren Komparatoren abhängig von einem Vergleich jedes Komparators der ein oder mehreren Komparatoren zwischen der Ausgangsspannung desjenigen der zwei oder mehreren schaltbaren Elemente, dem der Komparator zugeordnet ist, mit einer Grenzspannung. Und:
- Erzeugen der binären Zahlensequenz abhängig von dem binären Ausgabewert jedes der ein oder mehreren Komparatoren.

Ferner wird ein Computerprogramm mit einem Programmcode zur Durchführung des oben beschriebenen Verfahrens gemäß einer Ausführungsform bereitgestellt.

In einer Ausführungsform werden memristive Bauelemente für PUF mit einer geringen Fehlerrate und mit einem Referenzwert der keine zusätzlichen Fehler verursacht, bereitgestellt.

Gemäß einer Ausführungsform wird ein memristives Bauelement in Einzelzell-, Linien- oder Array-Ausführung bereitgestellt, bei dem die Strom-Spannungs-(IV)-Charakteristik jeder Zelle reproduzierbar ist. Die Verteilung der "Antworten" (Output), bspw. eines Lesestromes, bei Abfrage von "Herausforderungen" (Eingabe), bspw. einer Lesespannung, soll gaußförmig um einen Mittelwert, der spezifisch für jede Zelle des memristiven Bauelementes in Einzelzell-, Linien- oder Array-Ausführung ist, verteilt sein. Die Halbwertsbreite der gaußförmigen Verteilung der "Antwort" ist so gering, dass die gaußförmig verteilten "Antworten" eindeutig der entsprechenden Zelle des memristiven Bauelementes zuzuordnen sind.

Der Referenzwert kann beispielsweise die "Antwort" derjenigen Zelle des memristiven Bauelementes in Einzelzell-, Linien- oder Array-Ausführung sein, deren maximal wahrscheinlichste "Antwort" der Mittelwert aller maximal wahrscheinlichsten Antworten der Zellen des memristiven Bauelementes in Einzelzell-, Linien- oder Array-Ausführung sind. Das zuverlässige Funktionieren der PUF unter extremen Temperaturen kann z.B. durch eine vergleichbare Änderung der IV-Charakteristiken aller Zellen des memristiven Bauelementes in Einzelzell-, Linien- oder Array-Ausführung gewährleistet werden. Mit demselben memristiven Bauelement können z.B. verschiedene PUFs durch Verwendung verschiedener "Herausforderungen" und verschiedener "Antworten" realisiert werden. Die Wahl der "Herausforderung" und der "Antwort" erfolgt dahingehend, dass die Fehlerrate des PUF so gering wie möglich ist.

Bevorzugte Ausführungsformen finden sich in den abhängigen Ansprüchen.

Nachfolgend werden bevorzugte Ausführungsformen der Erfindung unter Bezugnahme auf die Zeichnungen beschrieben.

In den Zeichnungen ist dargestellt:
- Fig. 1: zeigt eine Vorrichtung zur Erzeugung einer binären Zahlensequenz gemäß einer Ausführungsform.
- Fig. 2: zeigt eine experimentelle Strom-Spannungs-Charakteristik einer einzelnen Zelle eines memristiven Bauelementes gemäß einer Ausführungsform.
- Fig. 3: zeigt eine Leitfähigkeitsverteilung (Histogramm) in einer einzelnen Zelle eines memristiven Bauelementes gemäß einer Ausführungsform.
- Fig. 4: zeigt die Strom-Spannungs-Charakteristik von 50 verschiedenen Zellen eines memristiven Bauelementes gemäß einer Ausführungsform.
- Fig. 5: zeigt Schaltung eines n-Bit PUF gemäß einer Ausführungsform.

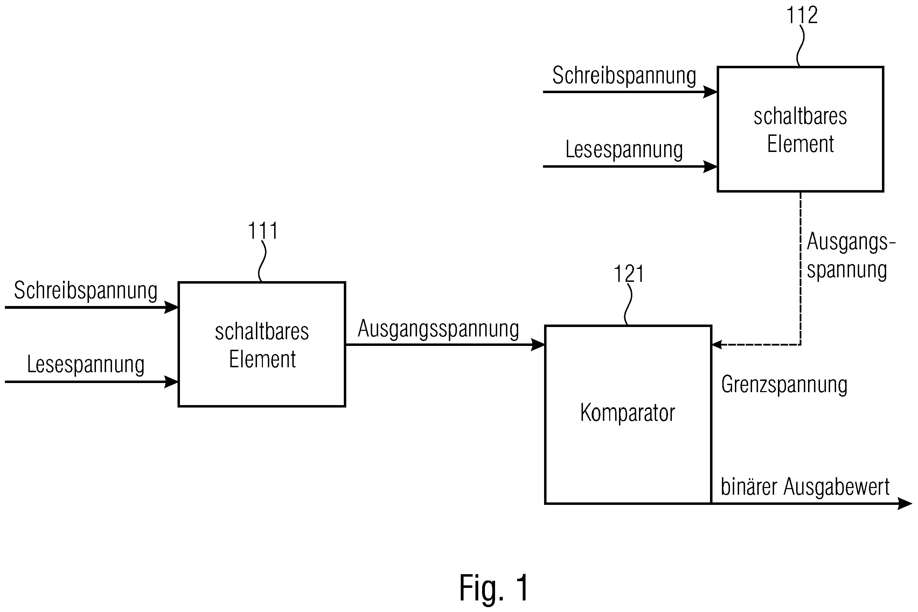

Fig. 1 zeigt eine Vorrichtung zur Erzeugung einer binären Zahlensequenz gemäß einer Ausführungsform.

Die Vorrichtung umfasst zwei oder mehr schaltbare Elemente 111, 112.

Die Vorrichtung ist ausgebildet, an jedes der zwei oder mehreren schaltbaren Elemente 111, 112 als Schreibspannung eine erste Schreibspannung oder eine zweite Schreibspannung, die von der ersten Schreibspannung verschieden ist, anzulegen, und/oder an jedes der zwei oder mehreren schaltbaren Elemente 111, 112 als Lesespannung eine erste Lesespannung oder eine zweite Lesespannung, die von der ersten Lesespannung verschieden ist, anzulegen.

Jedes schaltbare Element der zwei oder mehreren schaltbaren Elemente 111, 112 ist ausgebildet, abhängig von der an das schaltbare Element angelegten Schreibspannung und/oder abhängig von der an das schaltbare Element angelegten Lesespannung, eine Ausgangsspannung mit einem ersten zufälligen oder pseudozufälligen Spannungswert aus einem ersten Spannungs-Wertebereich auszugeben oder mit einem zweiten zufälligen oder pseudozufälligen Spannungswert aus einem zweiten Spannungs-Wertebereich auszugeben.

Des Weiteren umfasst die Vorrichtung ein oder mehr Komparatoren 121, wobei jeder der ein oder mehreren Komparatoren 121 genau einem der zwei oder mehr schaltbaren Elemente 111, 112 zugeordnet ist. Jeder Komparator der ein oder mehreren Komparatoren 121 ist ausgebildet, abhängig von einem Vergleich der Ausgangsspannung desjenigen der zwei oder mehreren schaltbaren Elemente 111, 112, dem der Komparator zugeordnet ist, mit einer Grenzspannung, einen binären Ausgabewert auszugeben.

Die Vorrichtung ist ausgebildet ist, die binäre Zahlensequenz abhängig von dem binären Ausgabewert jedes der ein oder mehreren Komparatoren 121 zu erzeugen.

Gemäß einer Ausführungsform kann z.B. die Vorrichtung ausgebildet sein, jedem der zwei oder mehreren schaltbaren Elemente 111, 112 dieselbe vordefinierte Schreibspannung anzulegen.

In einer Ausführungsform kann z.B. die Vorrichtung ausgebildet sein, jedem der zwei oder mehreren schaltbaren Elemente 111, 112 dieselbe vordefinierte Lesespannung anzulegen.

Gemäß einer Ausführungsform kann z.B. die jeder Komparator der ein oder mehreren Komparatoren 121 ausgebildet sein, den Vergleich der Ausgangsspannung desjenigen der zwei oder mehreren schaltbaren Elemente 111, 112, das dem Komparator zugeordnet ist, mit demselben Grenzspannung durchzuführen.

In einer Ausführungsform kann z.B. jeder der ein oder mehreren Komparatoren ausgebildet sein, als die Grenzspannung die Ausgangsspannung eines der zwei oder mehreren schaltbaren Elemente 111, 112 zu verwenden.

Gemäß einer Ausführungsform kann z.B. jeder der ein oder mehreren Komparatoren ausgebildet sein, als die Grenzspannung die Ausgangsspannung eines der zwei oder mehreren schaltbaren Elemente 111, 112 zu verwenden, dem keiner der ein oder mehreren Komparatoren 121 zugeordnet ist.

In einer Ausführungsform kann z.B. genau einem der zwei oder mehreren schaltbaren Elemente 111, 112 keiner der ein oder mehreren Komparatoren 121 zugeordnet sein.

Gemäß einer Ausführungsform kann z.B. die Vorrichtung eine um eins größere Anzahl an schaltbaren Elementen der zwei oder mehreren schaltbaren Elementen 111, 112 aufweisen, als an Komparatoren der ein oder mehreren Komparatoren.

In einer Ausführungsform kann z.B. die Vorrichtung drei oder mehrere schaltbare Elemente 111, 112 und zwei oder mehrere Komparatoren aufweisen 121.

Gemäß einer Ausführungsform kann z.B. jeder der ein oder mehreren Komparatoren 121 ausgebildet sein, wenn die erste Ausgangsspannung aus dem ersten Wertebereich kleiner oder gleich der Grenzspannung ist, einen ersten binären Wert als den binären Ausgabewert auszugeben; und wenn die erste Ausgangsspannung aus dem ersten Wertebereich größer als die Grenzspannung ist, einen zweiten binären Wert, der von dem binären Wert verschieden ist, als den binären Ausgabewert auszugeben.

In einer Ausführungsform kann z.B. jedes der ein oder mehreren schaltbaren Elemente (110) ein Memristor sein.

Gemäß einer Ausführungsform kann z.B. jedes der ein oder mehreren schaltbare Elemente (110) Yttrium-Manganoxid aufweisen.

In einer Ausführungsform kann z.B. jedes der ein oder mehreren schaltbaren Elemente (110) Bismut-Ferrit und/oder mit Titan dotiertes Bismut-Ferrit aufweisen.

Gemäß einer Ausführungsform kann z.B. die Grenzspannung derart definiert sein, dass eine statistische Wahrscheinlichkeit, dass die erste Ausgangsspannung mit dem ersten zufälligen oder pseudozufälligen Spannungswert größer als die Grenzspannung ist, einen Wert zwischen 45 % und 55 % aufweist.

In einer Ausführungsform kann z.B. die Grenzspannung derart festgelegt sein, dass die statistische Wahrscheinlichkeit, dass die erste Ausgangsspannung mit dem ersten zufälligen oder pseudozufälligen Spannungswert größer als die Grenzspannung ist, 50 % ist.

Gemäß einer Ausführungsform kann z.B. die Vorrichtung ausgebildet sein, an jedes der zwei oder mehreren schaltbaren Elemente 111, 112 die Schreibspannung und die Lesespannung anzulegen, wobei z.B. jedes schaltbare Element der zwei oder mehreren schaltbaren Elemente 111, 112 ausgebildet sein kann, abhängig von der an das schaltbare Element angelegten Schreibspannung und der an das schaltbare Element angelegten Lesespannung die Ausgangsspannung auszugeben.

Die tatsächliche Polarität und Amplitude der angelegten Schreibvorspannung werden durch das Potential der oberen Elektrode (T1) und der unteren Elektrode (T2) des Widerstandsschalters bestimmt. Beispielsweise kann die obere Elektrode (T1) als Referenz für die Vorspannung, die an das Gerät angelegt wird, angesehen werden. Wenn das Potential der oberen Elektrode höher als das der unteren Elektrode ist, kann dies als positive Spannung angesehen werden, die an das Gerät angelegt wird. Wenn andernfalls das Potential der unteren Elektrode ein höheres Potential aufweist, kann dies als negative Spannung angesehen werden, die an das Gerät angelegt wird.

Zu beachten ist, dass wenn die obere Elektrode und die untere Elektrode dasselbe Potenzial aufweisen, am Gerät keine Potenzialdifferenz besteht, d.h. am Gerät würde keine tatsächliche Spannung anliegen.

Nachfolgend werden spezielle Ausführungsbeispiele und Erläuterungen zu diesen bereitgestellt.

In einem Ausführungsbeispiel für eine hardware-basierte PUF kann beispielsweise ein BiFeO₃ (BFO)-Memristor als bipolarer Schalter mit einer rekonfigurierbaren Barrierenhöhe und mit zwei rekonfigurierbaren Barrierenhöhen eingesetzt werden.

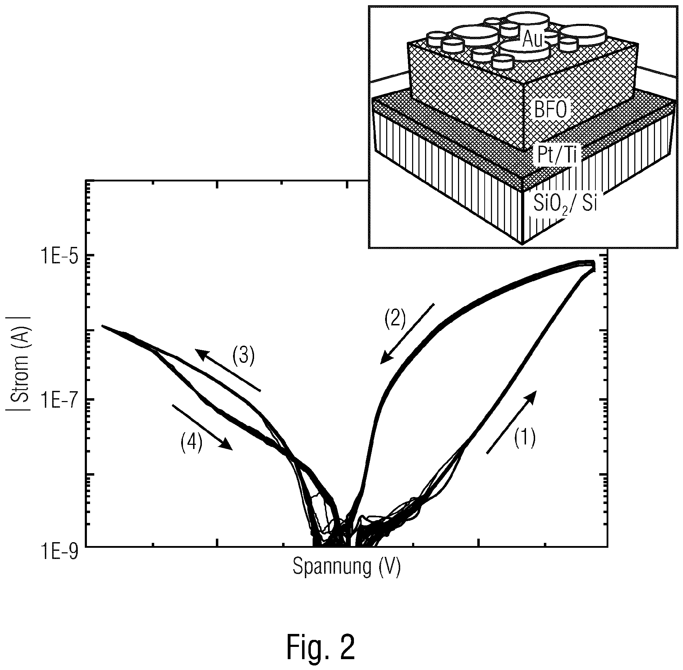

Fig. 2 zeigt eine experimentelle Strom-Spannungs-Charakteristik (IV-Charakteristik) einer einzelnen Zelle eines memristiven Bauelementes auf der Basis von BFO im Semilog-Maßstab (500 Zyklen wiederholt). Die Größen der oberen Kontaktfläche sind 0,1 mm2. Die Impulsbreite beträgt tp = 10 ms. Die Spannungsamplitude für das Rampen der Spannung in positiver als auch in negativer Richtung beträgt Vw = |6 V|. Die Skizze im Inset demonstriert den Aufbau einer einzelnen Zelle eines memristiven Bauelementes auf der Basis von BFO.

Insbesondere zeigt die IV-Charakteristik einer einzelnen Zelle des memristiven Bauelementes auf der Basis von BFO (Fig. 2, 500 Zyklen) eine reproduzierbare hysteretische IV-Charakteristik beim Rampen der Spannung zwischen -6 V und + 6V. Dieses reproduzierbare Schaltverhalten wird auf die Umverteilung mobiler Donatoren (Sauerstofffehlstellen) im BFO und deren Einfang/Release durch feste Donatoren (Ti-Donatoren) zurückgeführt. SET und RESET werden durch unterschiedliche Spannungspolaritäten ausgelöst, d.h. positive Schreibpulse schalten den Memristor in den LRS, während negative Schreibpulse den Memristor in den HRS schalten. Die Leitfähigkeit im LRS und HRS ist als der Leitwert bei einer geringen Lesevorspannung (Vr) definiert, wenn sich der Memristor im LRS (GLRS) bzw. HRS (GHRS) befindet. Das OFF/ON-Leitfähigkeits-Verhältnis einer einzelnen Zelle eines memristiven Bauelementes wird als GLRS / GHRS bezeichnet.

Das effektive und stabile Einfangen und Release mobiler Sauerstofffehlstellen durch fixierte Ti-Donatoren in der Nähe der unteren Elektrode [28] führt zu unzuverlässigen Schalteigenschaften in einzelnen BFO-Membranzellen (Fig. 2).

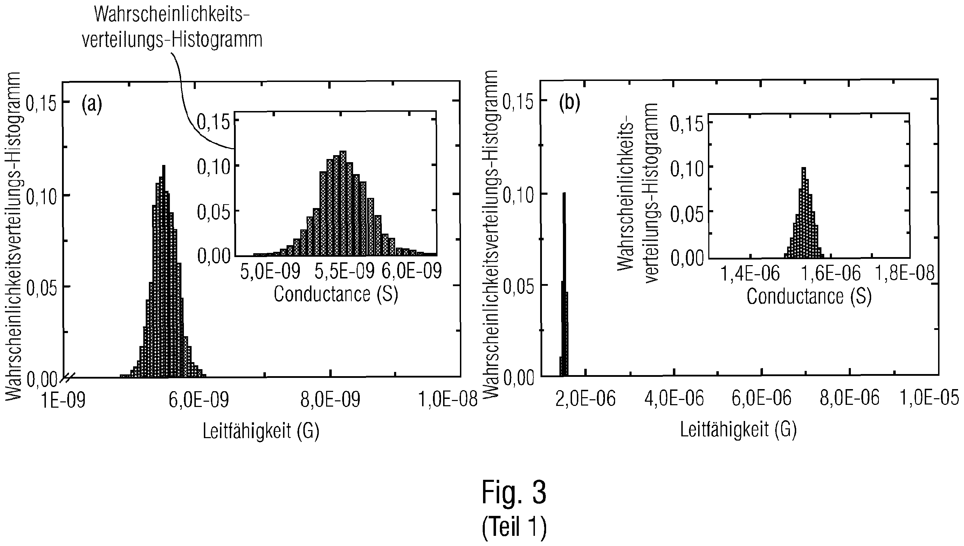

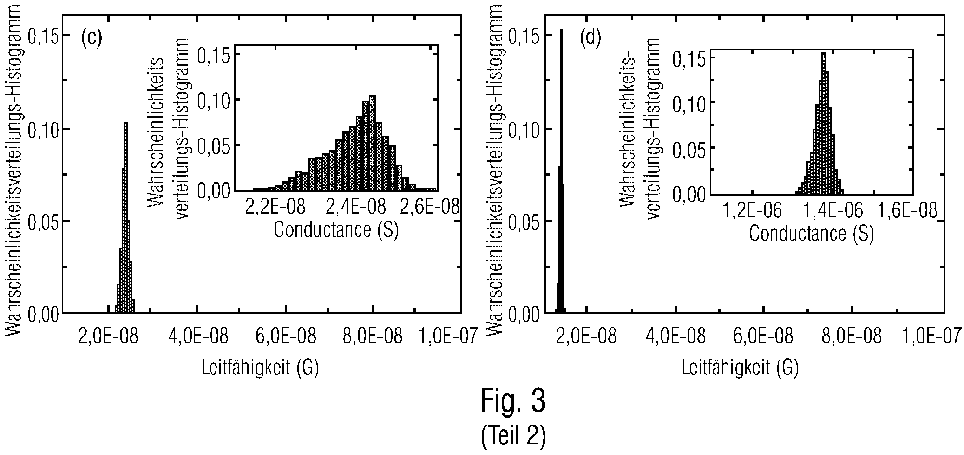

Fig. 3 zeigt die Leitfähigkeitsverteilung (Histogramm) in einer einzelnen Zelle eines memristiven Bauelementes auf der Basis von BFO bei +3 V Lesespannnung nach dem Initialisieren der Zelle (a) in den HRS (Zweig (1) in 1) oder (b) in den LRS (Zweig (2) in 1). Leitfähigkeitsverteilung bei -3 V Lesespannung nach dem Initialisieren der Zelle (c) in den LRS (1) oder (d) in den HRS (1). Die Größen der oberen Kontaktfläche sind 0,1 mm2. Die Impulsbreite zum Initialisieren beträgt tp = 10 ms.

Insbesondere sind in Fig. 3 als vorläufiges Ergebnis die Leitfähigkeits-Histogramme in einer einzelnen BFO-Erinnerungszelle in verschiedenen Betriebsfenstern in Fig. 3 gezeigt. Die Leitfähigkeitsverteilungen ist gaußförmig mit einer sehr geringen Halbwertsbreite, was auf ein zuverlässiges Schalten in der BFO-Zelle hindeutet.

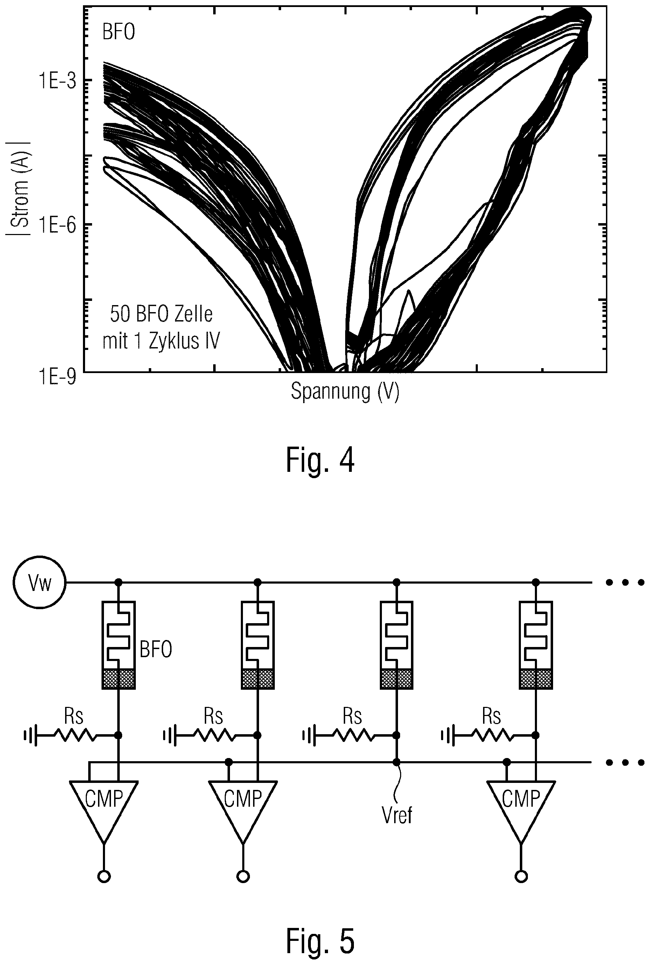

Fig. 4 zeigt eine experimentelle IV-Charakteristik (erster Zyklus) von 50 verschiedenen Zellen eines memristiven Bauelementes auf der Basis von BFO im Semilog-Maßstab. Die Herstellungsparameter für die 50 Zellen des memristiven Bauelementes waren gleich. Die Spannungsamplitude für das Rampen der Spannung in positiver als auch in negativer Richtung beträgt Vw = |6 V|.

Aufgrund zufällig verteilter Prozessschwankungen während des Herstellungsprozesses von memristiven Bauelementen während der gleichen Vorbereitungsprozesse ist die IV-Charakteristik für verschiedene Zellen eines memristiven Bauelementes unterschiedlich (siehe Fig. 4). Die Zufälligkeit der Streuung der Sauerstofffehlstellen ist ein Hindernis für das Klonen von Fingerabdrücken, und die eindeutigen Fingerabdrücke jedes Geräts waren nach der Herstellung beständig. Abhängig von der Schreibstörung gegenüber der einzelnen BFO-Vorrichtung, ist die Fähigkeit, die Leitfähigkeit über der festgelegten Referenzleitfähigkeit bei einer bestimmten Schreibstörung zu erreichen, zufällig (1 für die Leitfähigkeit bei Lesebias über der Referenzleitfähigkeit, 0 für die anderen Fälle). Daher können memristive Bauelemente auf der Basis von BFO als physikalisch nicht klonbare Funktion verwendet werden.

Nachfolgend wird ein Ausführungsbeispiel für den Betrieb einer Vorrichtung für hardware-basierte physikalisch nicht klonbare Funktionen (PUF) bereitgestellt. Die inhärenten Herstellungsprozessvariationen definieren ein zufälliges einmaliges Eingabe-Ausgabe-Verhalten (oder Challenge-Response-Verhalten) in einem memristiven Bauelement auf der Basis von BFO, (siehe Fig. 4) das zum Entwerfen einer PUF verwendet werden kann. Dies liegt daran, dass die Schaltleitfähigkeit von Zelle zu Zelle variiert. Das erfindungsgemäße PUF-Design beruht darauf, die stochastische Verteilung von Sauerstofffehlstellen in einen zufälligen binären Bitstrom zu übersetzen, der als Gerätefingerabdruck dient, während das hervorragende Schaltverhalten in memristiven Bauelementen auf der Basis von BFO eine gaußförmige Verteilung der "Antwort" auf eine "Herausforderung" ermöglicht.

Fig. 5 zeigt die Schaltung eines n-Bit PUF, welcher unter anderem auch ein memristives Bauelement beispielsweise auf der Basis von BFO mit n+1 in Reihe angeordneten Memristoren umfasst. Durch Verwendung eines Stromkomparators kann die Schaltung beispielsweise weiter vereinfacht werden.

In der in Fig. 5 gezeigten PUF werden die n-Bit-BFO-Membranzellen parallel durch eine Quellenspannung Vw gesteuert. Der zufällige Spannungswert über jedem Widerstand Rs, der einzeln mit jeder BFO-Membranzelle in Reihe geschaltet ist, wird mit der Referenzspannung Vref verglichen. Ist ein Spannungswert über Rs höher als Vref, wird das Bit '1' generiert. Andernfalls wird Bit "0" generiert. Die vorgeschlagene PUF mit n-Bit-BFO-Memristivzellen kann (n - 1) Zufalls-bits in Echtzeit erzeugen. Man könnte Vref variieren, um mehr Challenge-Response-Paare (CRPs) zu realisieren.

Insgesamt erzeugt die Schaltungsanordnung der Fig. 5 also n-1 Bits einer binären Zahlensequenz.

Aufgrund der in den vorherigen Experimenten beobachteten hohen Reproduzierbarkeit der IV-Eigenschaften einer Zelle ist eine hohe Zuverlässigkeit von BFO-PUFs zu erwarten. Die vorteilhafte Zufälligkeit der Dispersion stellt ein Hindernis für das Klonen von Fingerabdrücken dar und die einzigartigen Fingerabdrücke jedes Geräts waren nach der Herstellung beständig. Durch Verwendung des RESET-Prozesses können die Fingerabdrücke leicht aus dem Analogschnittstellenblock entfernt und durch die frei gewählte SET-Abweichung erneut ausgelöst werden.

Verglichen mit den bestehenden auf Memristoren basierenden PUFs ist der erste Vorteil des vorgeschlagenen BFO-PUFs seine erwartete hohe Zuverlässigkeit und folglich eine sehr niedrige Bitfehlerrate (aufgrund der gezeigten stabilen Schalteigenschaften von BFO-Memristor-Zellen) in 1). Der zweite Vorteil ist die erwartete geringere Widerstandsfähigkeit gegen Änderungen der Betriebstemperatur: Die Leitfähigkeit von Einzelzellen in memristiven Bauelementen auf der Basis von BFO nimmt in einem bestimmten Betriebsfenster mit steigender Temperatur (GOFFSET) in der gleichen Tendenz zu. Daher sind die Werte der Differenzen der binären Bits am Ausgang des Komparators aufgrund der Kompensation des resultierenden GOFFSET stabil und unabhängig von der Temperatur.

Nachfolgend werden weitere Ausführungsbeispiele bereitgestellt.

Gemäß einer Ausführungsform wird z.B. eine Memristor-basierte physikalisch nicht klonbare Funktion bereitgestellt, in welcher der Threshold Parameter für die Zuordnung einer Wahrscheinlichkeit mit der Schreibspannung Uw und der Lesespannung Ur definiert wird.

In einer Ausführungsform haben z.B. Memristor-basierte physikalisch nicht klonbare Funktionen für eine vorgegebene Schreibspannung Uw mindestens eine Lesespannung Ur, bei der der Lesestrom gaußförmig verteilt ist.

Gemäß einer Ausführungsform haben z.B. Memristor-basierte physikalisch nicht klonbare Funktionen für eine vorgegebene Lesespannung Ur mindestens eine Schreibspannung Uw, bei der der Lesestrom gaußförmig ist.

In einer Ausführungsform wird z.B. ein Referenzparameter (Grenzwert/Threshold z.B. eine Grenzspannung) für eine vorgegebene Wahrscheinlichkeit entweder über die Schreibspannung Uw oder über die Lesespannung Ur definiert. Diese Definition kann z.B. von den Umgebungsbedingungen (PUF-Schaltung, Temperatur,..) abhängen.

Als ein Anwendungsbeispiel wird z.B. eine Memristor-basierte n-bit PUF mit einem zusätzlichen Memristor als Referenz eingesetzt.

Gemäß einem Ausführungsbeispiel haben die Memristoren des n-bit PUF z.B. eine gemeinsame oder eine strukturierte Rückseitenelektrode und sind beispielsweise als Linien-Array oder als Crossbar-Array ausgebildet.

Beispielsweise hängen in einem Ausführungsbeispiel die Werte der Schreibspannung Uw und der Lesespannung Ur zum Erreichen eines vorgegebenen Lesestromes Ir von den Umgebungsbedingungen (PUF-Schaltung, Temperatur, etc.) ab. Die auftretende Verschiebung des Lesestromes Ir kann beispielsweise mit dem zusätzlichen Memristor als Referenz ausgeglichen werden, und es kann z.B. das Problem der Resilienz gelöst werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BlueRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder eine für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literatur:

[1] R. H. Weber, R. Weber, "Internet of Things", Springer. Vol. 12 (2010).
[2] F. Regazzoni, I. Polian, "Securing the hardware of cyber-physical systems," Asian South Pacific Design Automation Conf. (ASP-DAC): 194-199 (2017).
[3] R. Pappu, B. Recht, J. Taylor and N. Gershenfeld. Physical one-way functions. Science, 297(5589):2026-30 (2002).
[4] B. Gassend, D. Clarke, M. Van Dijk and S. Devadas. Silicon physical random functions. in Proc. CCS, ACM, 148-160 (2002).
[5] G. E. Suh and S. Devadas. Physical unclonable functions for device authentication and secret key generation. Proc. Des. Autom. Conf. ACM, 9-14 (2007).
[6] R. Horstmeyer, B. Judkewitz, I. M. Vellekoop, S. Assawaworrarit and C. Yang. Physical key-protected one-time pad. Sci. Rep. 3: 3543 (2013).
[7] A. Maiti and P. Schaumont, Improving the quality of a physical unclonable function using configurable ring oscillators. In: International Conference on Field Programmable Logic and Applications, FPL International Conf. 2009, IEEE 703-707 (2009).
[8] R. Helinski, D. Acharyya and J. Plusquellic. A physical unclonable function defined using power distribution system equivalent resistance variations. DAC '09 Proceedings of the 46th Annual Design Automation Conference, 676-681 (2009).
[9] A. F. Smith, P. Patton and S. E. Skrabalak. Plasmonic Nanoparticles as a Physically Unclonable Function for Responsive anti-counterfeit nanofingerprints. Adv. Funct. Mater. 26: 1315-1321 (2016).
[10] J. Kim, J. M. Yun, J. Jung, H. Song, J. B. Kim and H. Ihee, Anti-counterfeit nanoscale fingerprints based on randomly distributed nanowires. Nanotechnology, 25, 155303 (2014).
[11] A. Maiti, V. Gunreddy and P. Schaumont. A systematic method to evaluate and compare the performance of physical unclonable functions. In: Athanas, P., Pnevmatikatos, D., Sklavos, N. (eds.) Embedded systems design with FPGAs, pp. 245-267. Springer, New York (2013).
[12] Y. Hori, T. Yoshida, T. Katashita and A. Satoh, Quantitative and statistical performance evaluation of arbiter physical unclonable functions on FPGAs. In: 2010 international conference on reconfigurable computing and FPGAs (ReConFig). IEEE pp. 298-303 (2010).
[13] D. E. Holcomb, W. P. Burleson and K. Fu. Power-up SRAM state as an identifying fingerprint and source of true random numbers. IEEE Transactions on Computers 58 (9), 1198-1210 (2008).
[14] D. E. Holcomb, W. P. Burleson and K. Fu, Initial SRAM state as a fingerprint and source of true random numbers for RFID tags Proceedings of the Conference on RFID Security 7 (2), 01 (2007).
[15] J. Guajardo, S. S. Kumar, G. J. Schrijen and P. Tuyls, in CHES, 2007, vol. 4727, pp. 63-80.
[16] J. Rajendran, G. S. Rose, R. Karri and M. Potkonjak, VLSI (ISVLSI), 2012 IEEE Computer Society Annual Symposium on, IEEE, 2012.
[17] P. Koeberl, Ü. Kocaba 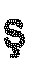 and A. Sadeghi, "Memristor PUFs: A new generation of memory-based Physically Unclonable Functions," 2013 Design, Automation & Test in Europe conference & Exhibition (DATE), 428-431 (2013).
[18] G. S. Rose, N. McDolnald, L. K. Ya, B. Wysocki, "A write-time based memristive PUF for hardware security applications", In IEEE/ACM International Conference on Computer-Aided Design (ICCAD), (2013).
[19] M. Terai, et al, "Effect of bottom electrode of ReRAM with Ta2O5/TiO2 stack on RTN and retention," IEDM Tech. Dig., 775 (2009).
[20] J.K. Lee, et al, "Extraction of trap location and energy from random telegraph noise in amorphous TiOx resistance random access memories," Appl. Phy. Lett. 98, 143502 (2011).
[21] N. Raghavan, et al, "RTN insight to filamentary instability and disturb immunity in ultra-low power switching HfOx and AlOx RRAM," IEEE Sym. VLSI Tech., 164 (2013).
[22] G. S. Rose, N. McDolnald, L. K. Ya, B. Wysocki. A write-time based memristive PUF for hardware security applications. In IEEE/ACM International Conference on Computer-Aided Design (ICCAD), 2013.
[23] P. Koeberl, U. Kocaba, A. -R. Sadeghi. Memristor PUFs: A new generation of memristor-based physically unclonable functions. In Design, Automation and Test in Europe (DATE), 2014.
[24] H. Schmidt, T. Mikolajick, R. Waser, E. Linn. Big Data ohne Energiekollaps. Physik in unserer Zeit 46 (2) (2015).
[25] L. Gao, P. Y. Chen, R. Liu and S. Yu, "Physical unclonable function exploiting sneak paths in resistive cross-point array", IEEE Trans. Electron Devices, 63, 3109-3115 (2016).
[26] R. Liu, H. Wu, Y. Pang, H. Qian and S. Yu, "Experimental Characterization of Physical Unclonable Function Based on 1 kb Resistive Random Access Memory Arrays", IEEE Electron Device Letters, 36(12): 1380-1383 (2015).
[27] R. Liu, H. Wu, Y. Pang, H. Qian and S. Yu, "A highly reliable and tamper-resistant RRAM PUF: Design and experimental validation", 2016 IEEE International Symposium on Hardware Oriented Security and Trust (HOST), IEEE (2016).
[28] T. You, N. Du, S. Slesazeck, T. Mikolajick, G. Li, D. Bürger, "Bipolar electricfield enhanced trapping and detrapping of mobile donors in BiFeO3 memristors", ACS applied materials & interfaces, 6.22 (2014).

## Patentansprüche

1. Vorrichtung zur Erzeugung einer binären Zahlensequenz, wobei die Vorrichtung umfasst:
Zwei oder mehr Memristoren (111, 112), wobei die Vorrichtung ausgebildet ist, an jeden der zwei oder mehreren Memristoren (111, 112) als Schreibspannung eine erste Schreibspannung oder eine zweite Schreibspannung, die von der ersten Schreibspannung verschieden ist, anzulegen, und/oder an jeden der zwei oder mehreren Memristoren (111, 112) als Lesespannung eine erste Lesespannung oder eine zweite Lesespannung, die von der ersten Lesespannung verschieden ist, anzulegen, wobei jeder Memristor der zwei oder mehreren Memristoren (111, 112) ausgebildet ist, abhängig von der an den Memristor angelegten Schreibspannung und/oder abhängig von der an den Memristor angelegten Lesespannung, eine Ausgangsspannung mit einem ersten zufälligen oder pseudozufälligen Spannungswert aus einem ersten Spannungs-Wertebereich auszugeben oder mit einem zweiten zufälligen oder pseudozufälligen Spannungswert aus einem zweiten Spannungs-Wertebereich auszugeben; und
ein oder mehr Komparatoren (121), wobei jeder der ein oder mehreren Komparatoren (121) genau einem der zwei oder mehreren Memristoren (111, 112) zugeordnet ist;
wobei jeder Komparator der ein oder mehreren Komparatoren (121) ausgebildet ist, abhängig von einem Vergleich der Ausgangsspannung desjenigen der zwei oder mehreren Memristoren (111, 112), dem der Komparator zugeordnet ist, mit einer Grenzspannung, einen binären Ausgabewert auszugeben, und
wobei die Vorrichtung ausgebildet ist, die binären Zahlensequenz abhängig von dem binären Ausgabewert jedes der ein oder mehreren Komparatoren (121) zu erzeugen,
wobei jeder Komparator der ein oder mehreren Komparatoren (121) ausgebildet ist, den Vergleich der Ausgangsspannung desjenigen der zwei oder mehreren Memristoren (111, 112), der dem Komparator zugeordnet ist, mit derselben Grenzspannung durchzuführen,
**dadurch gekennzeichnet, dass**
jeder der ein oder mehreren Komparatoren (121) ausgebildet ist, als die Grenzspannung die Ausgangsspannung eines der zwei oder mehreren Memristoren (111, 112) zu verwenden.

2. Vorrichtung nach Anspruch 1,
wobei die Vorrichtung ausgebildet ist, jedem der zwei oder mehreren Memristoren (111, 112) dieselbe vordefinierte Schreibspannung anzulegen.

3. Vorrichtung nach Anspruch 1 oder 2,
wobei die Vorrichtung ausgebildet ist, jedem der zwei oder mehreren Memristoren (111, 112) dieselbe vordefinierte Lesespannung anzulegen.

4. Vorrichtung nach einem der vorherigen Ansprüche,
wobei jeder der ein oder mehreren Komparatoren ausgebildet ist, als die Grenzspannung die Ausgangsspannung eines der zwei oder mehreren Memristoren (111, 112) zu verwenden, dem keiner der ein oder mehreren Komparatoren (121) zugeordnet ist.

5. Vorrichtung nach Anspruch 4,
wobei genau einem der zwei oder mehreren Memristoren (111, 112) keiner der ein oder mehreren Komparatoren (121) zugeordnet ist.

6. Vorrichtung nach einem der vorherigen Ansprüche,
wobei die Vorrichtung eine um eins größere Anzahl an Memristoren der zwei oder mehreren Memristoren (111, 112) aufweist, als an Komparatoren der ein oder mehreren Komparatoren.

7. Vorrichtung nach einem der vorherigen Ansprüche,
wobei die Vorrichtung drei oder mehrere Memristoren (111, 112) und zwei oder mehrere Komparatoren aufweist (121).

8. Vorrichtung nach einem der vorherigen Ansprüche,
wobei jeder der ein oder mehreren Komparatoren (121) ausgebildet ist, wenn die erste Ausgangsspannung aus dem ersten Wertebereich kleiner oder gleich der Grenzspannung ist, einen ersten binären Wert als den binären Ausgabewert auszugeben; und wenn die erste Ausgangsspannung aus dem ersten Wertebereich größer als die Grenzspannung ist, einen zweiten binären Wert, der von dem binären Wert verschieden ist, als den binären Ausgabewert auszugeben.

9. Vorrichtung nach einem der vorherigen Ansprüche,
wobei jeder der zwei oder mehreren Memristoren (111, 112) Yttrium-Manganoxid aufweist.

10. Vorrichtung nach einem der vorherigen Ansprüche,
wobei jeder der zwei oder mehreren Memristoren (110) Bismut-Ferrit und/oder mit Titan dotiertes Bismut-Ferrit aufweist.

11. Vorrichtung nach einem der vorherigen Ansprüche,
wobei die Grenzspannung derart definiert ist, dass eine statistische Wahrscheinlichkeit, dass die erste Ausgangsspannung mit dem ersten zufälligen oder pseudozufälligen Spannungswert größer als die Grenzspannung ist, einen Wert zwischen 45 % und 55 % aufweist.

12. Vorrichtung nach Anspruch 11,
wobei die Grenzspannung derart festgelegt ist, dass die statistische Wahrscheinlichkeit, dass die erste Ausgangsspannung mit dem ersten zufälligen oder pseudozufälligen Spannungswert größer als die Grenzspannung ist, 50 % ist.

13. Vorrichtung nach einem der vorherigen Ansprüche,
wobei die Vorrichtung ausgebildet ist, an jeden der zwei oder mehreren Memristoren (111, 112) die Schreibspannung und die Lesespannung anzulegen, wobei jeder Memristor der zwei oder mehreren Memristoren (111, 112) ausgebildet ist, abhängig von der an das schaltbare Element angelegten Schreibspannung und der an das schaltbare Element angelegten Lesespannung die Ausgangsspannung auszugeben.

14. Verfahren zur Erzeugung einer binären Zahlensequenz, wobei das Verfahren umfasst:
Anlegen einer Schreibspannung, die eine erste Schreibspannung ist oder die eine zweite Schreibspannung ist, die von der ersten Schreibspannung verschieden ist, an jeden von zwei oder mehreren Memristoren (111, 112), und/oder Anlegen einer Lesespannung, die eine erste Lesespannung ist oder die eine zweite Lesespannung ist, die von der ersten Lesespannung verschieden ist, an jeden der zwei oder mehreren Memristoren (111, 112), wobei jeder Memristor der zwei oder mehreren Memristoren (111, 112), abhängig von der an das schaltbare Element angelegten Schreibspannung und/oder abhängig von der an das schaltbare Element angelegten Lesespannung, eine Ausgangsspannung mit einem ersten zufälligen oder pseudozufälligen Spannungswert aus einem ersten Spannungs-Wertebereich ausgibt oder mit einem zweiten zufälligen oder pseudozufälligen Spannungswert aus einem zweiten Spannungs-Wertebereich ausgibt; wobei jeder von ein oder mehreren Komparatoren (121) genau einem der zwei oder mehr Memristoren (111, 112) zugeordnet ist;
Ausgeben eines binären Ausgabewerts durch jeden von ein oder mehreren Komparatoren (121) abhängig von einem Vergleich jedes Komparators der ein oder mehreren Komparatoren (121) zwischen der Ausgangsspannung desjenigen der zwei oder mehreren Memristoren (111, 112), dem der Komparator zugeordnet ist, mit einer Grenzspannung; und
Erzeugen der binären Zahlensequenz abhängig von dem binären Ausgabewert jedes der ein oder mehreren Komparatoren (121),
wobei jeder Komparator der ein oder mehreren Komparatoren (121) den Vergleich der Ausgangsspannung desjenigen der zwei oder mehreren Memristoren (111, 112), der dem Komparator zugeordnet ist, mit derselben Grenzspannung durchführt,
**dadurch gekennzeichnet, dass**
jeder der ein oder mehreren Komparatoren (121) als die Grenzspannung die Ausgangsspannung eines der zwei oder mehreren Memristoren (111, 112) verwendet.

15. Computerprogramm mit einem Programmcode, der bei der Ausführung des Programmcodes durch einen Computer diesen veranlasst, das Verfahren nach Anspruch 14 auszuführen.

## Claims

1. Apparatus for generating a binary numerical sequence, the apparatus including:
two or more memristors (111, 112), wherein the apparatus is configured to apply a first write voltage or a second write voltage, different from the first write voltage, as a write voltage to each of the two or more memristors (111, 112), and/or to apply a first read voltage or a second read voltage, different from the first read voltage, as a read voltage to each of the two or more memristors (111, 112), wherein each memristor of the two or more memristors (111, 112) is configured to output, in dependence on the write voltage applied to the memristor and/or in dependence on the read voltage applied to the memristor, an output voltage with a first random or pseudo-random voltage value from a first voltage value range or with a second random or pseudo-random voltage value from a second voltage value range; and
one or more comparators (121), wherein each of the one or more comparators (121) is assigned to precisely one of the two or more memristors (111, 112);
wherein each comparator of the one or more comparators (121) is configured to output a binary output value in dependence on a comparison between the output voltage of the one of the two or more memristors (111, 112) having assigned thereto the comparator, and a threshold voltage, and
wherein the apparatus is configured to generate the binary numerical sequence in dependence on the binary output value of each of the one or more comparators (121),
wherein each comparator of the one or more comparators (121) is configured to perform the comparison between the output voltage of the one of the two or more memristors (111, 112) being assigned to the comparator, and the same threshold voltage,
**characterized in that** each of the one or more comparators (121) is configured to use as the threshold voltage the output voltage of one of the two or more memristors (111, 112).

2. Apparatus according to claim 1,
wherein the apparatus is configured to apply the same predefined write voltage to each of the two or more memristors (111, 112).

3. Apparatus according to claim 1 or 2,
wherein the apparatus is configured to apply the same predefined read voltage to each of the two or more memristors (111, 112).

4. Apparatus according to any of the preceding claims,
wherein each of the one or more comparators is configured to use as the threshold voltage the output voltage of one of the two or more memristors (111, 112) not having assigned thereto any of the one or more comparators (121).

5. Apparatus according to claim 4,
wherein precisely one of the two or more memristors (111, 112) does not have assigned thereto any of the one or more comparators (121).

6. Apparatus according to any of the preceding claims,
wherein the apparatus comprises a number of memristors of the two or more memristors (111, 112) that is larger by one than the number of comparators of the one or more comparators.

7. Apparatus according to any of the preceding claims,
wherein the apparatus comprises three or more memristors (111, 112) and two or more comparators (121).

8. Apparatus according to any of the preceding claims,
wherein each of the one or more comparators (121) is configured to output a first binary value as the binary output value if the first output voltage from the first value range is smaller than or equal to the threshold voltage; and to output a second binary value, different from the first binary value, as the binary output value if the first output voltage from the first value range is larger than the threshold voltage.

9. Apparatus according to any of the preceding claims,
wherein each of the one or more memristors (111, 112) comprises yttrium-manganese oxide.

10. Apparatus according to any of the preceding claims,
wherein each of the one or more memristors (110) comprises bismuth ferrite and/or titanium-doped bismuth ferrite.

11. Apparatus according to any of the preceding claims,
wherein the threshold voltage is defined such that a statistical probability that the first output voltage with the first random or pseudo-random voltage value is larger than the threshold voltage comprises a value of between 45% and 55%.

12. Apparatus according to claim 11,
wherein the threshold voltage is set such that the statistical probability that the first output voltage with the first random or pseudo-random voltage value is larger than the threshold voltage is 50%.

13. Apparatus according to any of the preceding claims,
wherein the apparatus is configured to apply the write voltage and the read voltage to each of the two or more memristors (111, 112), wherein each memristor of the two or more memristors (111, 112) is configured to output the output voltage in dependence on the write voltage applied to the switchable element and the read voltage applied to the switchable element.

14. Method for generating a binary numerical sequence, the method including:
applying a write voltage that is a first write voltage or a second write voltage, different from the first write voltage, to each of two or more memristors (111, 112), and/or applying a read voltage that is a first read voltage or a second read voltage, different from the first read voltage, to each of the two or more memristors (111, 112), wherein each memristor of the two or more memristors (111, 112) outputs, in dependence on the write voltage applied to the switchable element and/or in dependence on the read voltage applied to the switchable element, an output voltage with a first random or pseudo-random voltage value from a first voltage value range or with a second random or pseudo-random voltage value from a second voltage value range; wherein each of one or more comparators (121) is assigned to precisely one of the two or more memristors (111, 112);
outputting a binary output value through each of one or more comparators (121) in dependence on a comparison of each comparator of the one or more comparators (121) between the output voltage of the one of the two or more memristors (111, 112) having assigned thereto the comparator, and a threshold voltage; and
generating the binary numerical sequence in dependence on the binary output value of each of the one or more comparators (121),
wherein each comparator of the one or more comparators (121) performs the comparison between the output voltage of the one of the two or more memristors (111, 112) being assigned to the comparator, and the same threshold voltage,
**characterized in that**
each of the one or more comparators (121) uses as the threshold voltage the output voltage of one of the two or more memristors (111, 112).

15. Computer program having a program code that upon execution of the program code by a computer, causes the same to execute the method according to claim 14.

## Revendications

1. Dispositif pour la génération d'une séquence de nombres binaires, dans lequel le dispositif comporte:
deux ou plusieurs memristors (111, 112), où le dispositif est conçu pour appliquer à chacun des deux ou plusieurs memristors (111, 112), comme tension d'écriture, une première tension d'écriture ou une deuxième tension d'écriture, qui est différente de la première tension d'écriture, et/ou pour appliquer à chacun des deux ou plusieurs memristors (111, 112), comme tension de lecture, une première tension de lecture ou une deuxième tension de lecture, qui est différente de la première tension de lecture, où chaque memristor parmi les deux ou plusieurs memristors (111, 112) est conçu pour sortir, en fonction de la tension d'écriture appliquée au memristor et/ou en fonction de la tension de lecture appliquée au memristor, une tension de sortie d'une première valeur de tension aléatoire ou pseudo-aléatoire d'une première plage de valeurs de tension ou d'une deuxième valeur de tension aléatoire ou pseudo-aléatoire d'une deuxième plage de valeurs de tension; et
un ou plusieurs comparateurs (121), où chacun des un ou plusieurs comparateurs (121) est associé exactement à l'un des deux ou plusieurs memristors (111, 112);
dans lequel chaque comparateur des un ou plusieurs comparateurs (121) est conçu pour sortir, en fonction d'une comparaison de la tension de sortie de celui des deux ou plusieurs memristors (111, 112) auquel est associé le comparateur avec une tension limite, une valeur de sortie binaire, et
dans lequel le dispositif est conçu pour générer la séquence de nombres binaires en fonction de la valeur de sortie binaire de chacun des un ou plusieurs comparateurs (121),
dans lequel chaque comparateur des un ou plusieurs comparateurs (121) est conçu pour effectuer la comparaison de la tension de sortie de celui des deux ou plusieurs memristors (111, 112) qui est associé au comparateur avec la même tension limite,
**caractérisé par le fait que** chacun des un ou plusieurs comparateurs (121) est conçu pour utiliser, comme tension limite, la tension de sortie de l'un des deux ou plusieurs memristors (111, 112).

2. Dispositif selon la revendication 1,
dans lequel le dispositif est conçu pour appliquer à chacun des deux ou plusieurs memristors (111, 112) la même tension d'écriture prédéfinie.

3. Dispositif selon la revendication 1 ou 2,
dans lequel le dispositif est conçu pour appliquer à chacun des deux ou plusieurs memristors (111, 112) la même tension de lecture prédéfinie.

4. Dispositif selon l'une des revendications précédentes,
dans lequel chacun des un ou plusieurs comparateurs est conçu pour utiliser, comme tension limite, la tension de sortie de l'un des deux ou plusieurs memristors (111, 112) auquel n'est associé aucun des un ou plusieurs comparateurs (121).

5. Dispositif selon la revendication 4,
dans lequel à exactement un des deux ou plusieurs memristors (111, 112) n'est associé aucun des un ou plusieurs comparateurs (121).

6. Dispositif selon l'une des revendications précédentes,
dans lequel le dispositif présente un nombre supérieur de un de memristors parmi les deux ou plusieurs memristors (111, 112) que de comparateurs des un ou plusieurs comparateurs.

7. Dispositif selon l'une des revendications précédentes,
dans lequel le dispositif présente trois memristors (111, 112) ou plus et deux comparateurs (121) ou plus.

8. Dispositif selon l'une des revendications précédentes,
dans lequel chacun des un ou plusieurs comparateurs (121) est conçu pour sortir, lorsque la première tension de sortie de la première plage de valeurs est inférieure ou égale à la tension limite, une première valeur binaire comme valeur de sortie binaire; et pour sortir, lorsque la première tension de sortie de la première plage de valeurs est supérieure à la tension limite, une deuxième valeur binaire, qui est différente de la valeur binaire, comme valeur de sortie binaire.

9. Dispositif selon l'une des revendications précédentes,
dans lequel chacun des deux ou plusieurs memristors (111, 112) présente de l'oxyde d'yttrium et de manganèse.

10. Dispositif selon l'une des revendications précédentes,
dans lequel chacun des deux ou plusieurs memristors (110) présente de la ferrite de bismuth et/ou de la ferrite de bismuth dopée de titane.

11. Dispositif selon l'une des revendications précédentes,
dans lequel la tension limite est définie de sorte qu'une probabilité statistique que la première tension de sortie à la première valeur de tension aléatoire ou pseudo-aléatoire soit supérieure à la tension limite présente une valeur comprise entre 45 % et 55 %.

12. Dispositif selon la revendication 11,
dans lequel la tension limite est fixée de sorte que la probabilité statistique que la première tension de sortie à la première valeur de tension aléatoire ou pseudo-aléatoire soit supérieure à la tension limite soit de 50 %.

13. Dispositif selon l'une des revendications précédentes,
dans lequel le dispositif est conçu pour appliquer à chacun des deux ou plusieurs memristors (111, 112) la tension d'écriture et la tension de lecture, dans lequel chaque memristor des deux ou plusieurs memristors (111, 112) est conçu pour sortir la tension de sortie en fonction de la tension d'écriture appliquée à l'élément commutable et de la tension de lecture appliquée à l'élément commutable.

14. Procédé pour la génération d'une séquence de nombres binaires, dans lequel le procédé comporte le fait de:
appliquer une tension d'écriture, qui est une première tension d'écriture ou qui est une deuxième tension d'écriture qui est différente de la première tension d'écriture, à chacun des deux ou plusieurs memristors (111, 112), et/ou appliquer une tension de lecture, qui est une première tension de lecture tension ou qui est une deuxième tension de lecture qui est différente de la première tension de lecture, à chacun des deux ou plusieurs memristors (111, 112), où chaque memristor des deux ou plusieurs memristors (111, 112) sort, en fonction de la tension d'écriture appliquée à l'élément commutable et/ou en fonction de la tension de lecture appliquée à l'élément commutable, une tension de sortie d'une première valeur de tension aléatoire ou pseudo-aléatoire d'une première plage de valeurs de tension ou d'une deuxième tension valeur aléatoire ou pseudo-aléatoire d'une deuxième plage de valeurs de tension; où chacun des un ou plusieurs comparateurs (121) est associé exactement à un des deux ou plusieurs memristors (111, 112);
sortir une valeur de sortie binaire par chacun des un ou plusieurs comparateurs (121) en fonction d'une comparaison de chaque comparateur des un ou plusieurs comparateurs (121) entre la tension de sortie de celui parmi les deux ou plusieurs memristors (111, 112) auquel est associé le comparateur avec une tension limite; et
générer la séquence de nombres binaires en fonction de la valeur de sortie binaire de chacun des un ou plusieurs comparateurs (121),
dans lequel chaque comparateur des un ou plusieurs comparateurs (121) effectue la comparaison de la tension de sortie de celui parmi les deux ou plusieurs memristors (111, 112) qui est associé au comparateur avec la même tension limite,
**caractérisé par le fait que** chacun des un ou plusieurs comparateurs (121) utilise comme tension limite la tension de sortie de l'un des deux ou plusieurs memristors (111, 112).

15. Programme d'ordinateur avec un code de programme qui, lorsque le code de programme est exécuté par un ordinateur, amène ce dernier à réaliser le procédé selon la revendication 14.
